# EUROPEAN PATENT APPLICATION

(11) **EP 4 628 324 A1**
(43) Date of publication of application: **08.10.2025**
(21) Application number: 25163402.8
(22) Date of filing: 13.03.2025
(51) Int. Cl.: B60C 1/00, C08F 240/00

(54) **RESIN DERIVED FROM END-OF-LIFE PRODUCTS**

(30) Priority: 14.03.2024 US 202418605257
(71) Applicant: The Goodyear Tire & Rubber Company, Akron, OH 44316 (US)
(72) Inventor: XIAOPING, Yang, Streetsboro, Ohio, 44241 (US); HUA, Kuo-Chih, Richfield, 44286 (US); SANDSTROM, Paul Harry, Cuyahoga Falls, 44223 (US); POMPEI, Manuela, 9768 Reuler (LU); KULIG, Joseph John, Tallmadge, 44278 (US); MARTTER, Teresa Diane, Akron, 44320 (US)
(74) Representative: Kutsch, Bernd

(57) **Abstract**

A resin comprising or consisting of a reaction product of the polymerization reaction of oil monomers is disclosed. The oil monomers have been obtained from a rubber article. The reaction product has a glass transition temperature Tg ranging from -30°C to 140°C and determined in accordance with ASTM D3418-75, a softening point in range of from 10°C to 170°C and determined in accordance with ASTM E28-58T, and a molecular weight Mw in a range of from 100 to 5000 Da and determined in accordance with ASTM D6579-11. Also, an article of manufacture such as a tire comprising or having incorporated such a resin is disclosed. Furthermore, a method for forming a resin from oil monomers is disclosed. the method comprising the steps of: obtaining an oil derived from thermal depolymerization of end-of-life tires (ELTS) and polymerizing the oil to produce a resin, preferably a hydrocarbon resin.

## Description

### Background of the Invention

It is possible to thermally decompose used tires ("end of life" tires or "ELTs") or other rubber articles to isolate organic and inorganic materials therefrom. The products obtained from thermally decomposed tires can include carbon black, steel, sulfur (usually isolated in the form of sulfur-containing compounds), gas(es), and/or a liquid oily product.

US 7,628,892 discloses a process for producing a two-phase fluid mixture from phase depolymerization of rubber products, like worn tires. This process involves depolymerization and separation of a mostly gaseous phase having physiochemical characteristics capable of feeding an ordinary diesel engine. Liquid phase hydrocarbons are also collected using the process of US 7,628,892. These liquid phase hydrocarbons are hereinafter referred to as "ELT-oil".

Typical tire recycling technologies produce lower quality materials that have limited use to enter production of new tires. It is now discovered that the depolymerization process can be optimized to maximize suitable organic hydrocarbon molecules, like, C5, C9, limonene and other resin precursors, such as monomers of the styrene type, in the liquid ELT oil phase.

It is desirable to use the liquid ELT-oil's hydrocarbons to produce hydrocarbon resins. The present disclosure provides resin(s) and a process for polymerizing the same using ELT oil preferably collected from depolymerization of tire/rubber products.

### Summary of the Invention

The invention relates to a resin in accordance with claim 1, to an article in accordance with claim 10, to a tire in accordance with claims 12, and to a method in accordance with claim 13.

Dependent claims refer to preferred embodiments of the invention.

Preferably, the reaction product has a glass transition temperature, Tg, ranging from 10°C to 100°C.

Preferably, the reaction product has a softening point from 60°C to 140°C.

Preferably, the reaction product has a molecular weight (Mw) between 300 and 2000 Da.

In one aspect of the invention, the resin is liquid at 23°C.

In another aspect of the invention, the resin is solid at 23°C.

One preferred embodiment is directed to a hydrocarbon resin comprising a reaction product of the polymerization reaction of ELT oil monomers. The reaction product has a glass transition temperature, Tg, ranging from -30°C to 140°C, a softening point from 10°C to 170°C, and a molecular weight Mw between 100 and 5000 Da.

Another preferred embodiment is directed to a tire having a tread and/or carcass compound comprising at least one rubber selected from the group consisting natural rubbers, rubbers derived from a diene monomer, and mixtures thereof, and an ELT hydrocarbon-based resin.

Another preferred embodiment is directed to a method of forming a resin from ELT oil. The method comprises the steps of obtaining an ELT oil derived from thermal depolymerization of ELTS and polymerizing the ELT oil to produce an ELT hydrocarbon-based resin.

### Detailed Description of Preferred Embodiments of the Invention

In this specification, the glass transition temperature Tg is determined using ASTM D3418-75 as a peak midpoint by a differential scanning calorimeter (DSC) at a temperature rate of increase of 10°C per minute.

In this specification, the softening point is determined using ASTM E28-58T (ring and ball softening point).

In this specification, the molecular weight (Mw) is determined using ASTM D6579-11 (size-exclusion chromatography).

The present invention relates to new synthetic resins and to a method for their preparation. It is a further object of this invention to provide new and useful copolymers prepared from the hydrocarbons formed from ELT depolymerization and to provide a method for their preparation.

In one preferred embodiment, the ELT oil is produced using the operation described in US 7,628,892, which discloses a process and a plant for producing liquid and storable combustible substances by depolymerization of ELTs. Whole tires or pieces of the same can be used. The process of US 7,628,892 produces a carbonaceous fuel product and a gaseous product by (S1) introducing calcium oxide to the tires in a depolymerizing device; (S2) activating combustion of the tires; (S3) carrying out a thermal process to form a bi-phases mixture comprising combustible micro-particles (i.e., oily particles in the form of drops) derived from the depolymerization; (S4) physically separating the solid phase from the liquid phase using condensation; (S5) and burning the gaseous phase while containing the liquid as a combustible substance.

The amount of combustible liquid products will vary, however, the total liquid product content (i.e., the "oil content" in the tire rubber) using the process of US 7,628,892 ranges between 35% to 40% of the weight of the tires and has the physiochemical characteristics shown in Table 1 of US 7,628,892.

Hydrocarbon products with five or more carbons in their chains such as C5 or C9 hydrocarbons are liquid at room temperature (23°C). In one embodiment, a liquid hydrocarbon product is produced using the operation described in US 10,703,876, which discloses a process and a plant for producing liquid and storable combustible substances by depolymerization of ELTs. Whole tires or pieces of the same can be used. The process of US 10,703,876 produces a carbonaceous fuel product and a gaseous product by (S1) introducing oxygen or air through a register over which material (e.g., tires) to be depolymerized overlies; (S2) partially combusting, or smoldering, the material while allowing a burner to generate heat using the air; (S3) separating the liquid hydrocarbon products from the gaseous products using a condenser, which lowers the temperature of the gas stream to obtain a liquid stream and a gas stream; and (S4) collecting the cooled liquid products.

There is no limitation made herein to the type of (e.g., pyrolysis, ELT) oil supplied to the presently disclosed resin synthesis. The preferred embodiment contemplates ELT oil produced using thermal decomposition, thermal de-manufacturing and/or thermal depolymerization of cured and/or uncured rubber articles and waste using processes similar to those described supra. Thermal depolymerization is distinguishable from traditional pyrolysis because it employs an oxidizing agent - i.e., air - to continue combustion of tires. Such oxidizing agent is absent in pyrolysis, such as the one described in US 2023/0407184 A1 in which a temperature ramp separates a pyrolysis oil from gaseous (below 150°C) and solid (above 260°) effluents. In US 2003/0407184 A1, the pyrolysis oil is an intermediate fraction supplied to resin synthesis.

In thermal depolymerization, however, a condensation phenomenon takes place and directs formed liquid effluent to a container. Such liquid effluent (i.e., the liquid phase hydrocarbon) is defined herein as the "base ELT oil" formed from ELT monomers. The base ELT oil can be either used as is or undergo one or more distillations to generate a refined ELT oil. As used herein, "refined ELT oil" can comprise distilled ELT oil or oil purified by other means known to one of ordinary skill in the art. The "distilled ELT oil" is "refined ELT oil", but refined ELT oil may or may not comprise distilled ELT oil.

As used herein, "ELT oil", "oil", "liquid effluent", "liquid phase" or hydrocarbons are interchangeable and used synonymously hereafter. As explained supra, "base ELT oil" refers specifically to the oil produced using thermal depolymerization of rubber articles. Although not limiting, these articles are contemplated to include whole or partial tires (new or end-of-life) and/or production plant waste. In one embodiment, it excludes the oil produced by pyrolysis. "ELT oil" on the other hand can refer to oil produced using pyrolysis or thermal depolymerization, among other approaches.

The operating conditions of the process according to US 10, 703,876 give a base ELT oil comprising at least 15 wt. % of C₄-C₁₂ olefinic monomers, preferably at least 20 wt. % of C₄-C₁₂ olefinic monomers.

"Olefinic monomers" means hydrocarbon-containing compounds that comprise unsaturated carbon-carbon bonds and are polymerizable in suitable conditions. Among these olefinic monomers, examples include limonene, terpenes, aromatic olefins such as styrene, alpha-methylstyrene, indene, coumarone, linear or cyclic olefins such as dicyclopentadiene.

Further refinement of the base ELT oil can be carried out by any method known by a person skilled in the art. It is discovered that overall olefin content, as defined supra, of the ELT oil does not change much between the base ELT oil and a refined ELT oil. However, it is discovered that the limonene content of a distilled ELT oil gets richer after each distillation cycle. It is also further believed that the limonene content can be maximized through use of ELTs having a relatively high content of polyisoprene elastomers, such as natural rubber, as the feedstock, and by optimization of the thermal reaction conditions, such as pressure, temperature, vapor residence time. Such feedstock favors the production of limonene monomers.

The base ELT oil comprises mainly of a mixture of hydrocarbons with a wide range of boiling points. The majority of these compounds form part of the family of the alkanes, olefins, naphthenes (cycloalkanes) and aromatics.

More particularly, the base ELT oil can be characterized as comprising at least 20 wt. % C₄-C₁₂ olefinic monomers comprising at least styrenics, limonenes and indenes, among others. Certain species containing heteroatoms may also be present. Upon analysis of samples of the base ELT oil, it is discovered that such oil is further characterized by over thirty (30) components at levels approximating 1% or in trace amounts.

It is discovered that the base ELT oil may be further refined to shift the distribution of components. It has been discovered that treating the base ELT oil by distillation can yield an ELT oil sample that contains greater limonene content. It is expected that additional distillations can be performed to reach a desired purity.

The present invention relates to a method of forming a resin using the ELT oil. Such method preferably comprises the steps below.

### Polymerization

In the practice of this invention, the untreated resinous material is preferably prepared by polymerizing a hydrocarbon mixture comprising from 50 to 95 weight percent of ELT oil and from 5 to 50 ppm of a methanol initiator in the presence of an anhydrous metal halide catalyst, which can act as a co-initiator. In the preferred embodiment, the mixture to be polymerized comprises from 65 to 95 weight percent of ELT oil and from 5 to 35 weight percent of inert solvent. In a preferred embodiment, from 0.5 weight percent to 5 weight percent, and more preferably from 1 wt% to 3 wt% anhydrous metal halide catalyst can be employed.

In practice, various anhydrous metallic or boron halide catalysts can be used to prepare the untreated resinous material. Representative examples of such catalysts are fluorides, chlorides bromides, and iodides of aluminum, tin, and boron. Such catalysts include, for example, aluminum chloride, stannic chloride, and boron trifluoride. Aluminum chloride and stannic chloride are preferred.

In carrying out the polymerization reaction, the hydrocarbon mixture is brought into contact with the anhydrous metal halide catalyst. Generally, the catalyst is used in particulate form or supported on light granular, and preferably porous particles. Generally, a particle size in the range of from 5 to 200 mesh size is used although larger or smaller particles can be used. The amount of catalyst used is not critical although sufficient catalyst must be used to cause a polymerization reaction to occur. In the contemplated embodiment, sufficient catalyst may approximate from between 200 to 500 ppm methanol.

The catalyst may be added to the hydrocarbon mixture, or the hydrocarbon mixture may be added to the catalyst. If desired, the catalyst and mixture of hydrocarbons can be added simultaneously or intermittently to a reactor. The reaction can be conducted continuously or by batch process techniques generally known to those skilled in the art.

The polymerization reaction is conducted in an organic solvent. Various solvents which are inert in that they do not enter the polymerization reaction may be used. Representative examples of inert solvents are aliphatic hydrocarbons such as pentane, hexane, and heptane, aromatic hydrocarbons such as toluene and benzene, and unreacted residual hydrocarbons from the reaction. Particularly preferred polar solvents are selected from the group consisting of benzene, toluene, xylene, chlorobenzene and methylene chloride.

Non-polar organic solvents, while not preferred, may also be used in conjunction with a polar solvent. The non-polar solvents may be selected from the group consisting of hexane, pentane, cyclohexane, napthas and olefins which are relatively inert under the conditions involved in the reaction, such as cyclopentene.

The total volume ratio of solvent to ELT oil in the reaction mixture preferably ranges from 1:2 to 1:6.

It is preferred to charge the reaction vessel with the solvent and catalysts and then add the ELT oil to the reaction vessel over time while stirring the reaction mixture. However, the ELT oil and catalyst may be added to the reaction vessel essentially simultaneously, particularly when conducting a continuous polymerization reaction.

A wide range of temperatures can be used for the polymerization reaction. The polymerization can be carried out at temperatures in the range of from 20°C to 1000°C, although usually the reaction is carried out at a temperature in the range of from 0°C to 500°C.

The polymerization reaction pressure is not critical and may be atmospheric or above or below atmospheric pressure.

Generally, a satisfactory polymerization can be conducted when the reaction is carried out at about autogenous pressure developed by the reactor under the operating conditions used. The time of the reaction is not generally critical and reaction times can vary from a few seconds to 12 hours or more.

### Washing

After the polymerization reaction is substantially complete, the reaction product mixture is preferably quenched to a temperature ranging from 15°C to 40°C with water and then heated to a temperature ranging from 50°C to 90°C.

### Vacuum Distillation and Nitrogen Sparging

After washing, the organic phase is distilled and sparged according to the process disclosed in US 6,121,392. In the contemplated embodiment, the separated organic phase may be washed with an alcohol and water blend at an elevated temperature to remove traces of catalyst and other impurities. The organic phase is distilled from the product under atmospheric pressure at a temperature of 240°C. A crude resin is then nitrogen sparged at 240°C to remove the dimers and to yield the lowest molecular weight resin (hereinafter "ELT resin"), as determined by the ring and ball method of ASTM E-28-58T. This is to separate the aqueous phase from the organic phase. In alternative embodiments, it can be performed by well-known phase separation techniques such as decantation, centrifugation, extraction or drying.

In a preferred embodiment, the ELT resin is a hydrocarbon resin. The hydrocarbon resin may be, for example, an aromatic and/or a nonaromatic based resin. Differences in resins are largely due to the olefins contained in the ELT-based feedstock from which the resin is derived.

In a preferred embodiment, the ELT resin is a terpene resin from the group dipentene (D,L-limonene). The terpene resin comprises, for example, polymers of limonene and preferably has a softening point in a range from 60°C to 170°C.

In another embodiment, the terpene can be used with other petroleum-based monomers, like styrene, to form a resinous product. Any process known to one of ordinary skill in the art can be employed. More particularly, the terepene or ELT resin can be copolymerized with other hydrocarbon cuts like C5 (olefins and diolefins containing an average of five carbon atoms), C9 (olefins and diolefins containing an average of nine carbon atoms), alphamethylstyrene (AMS), or mixtures thereof. In other embodiments, the terpene can be copolymerized with a phenolic monomer to form a terpene-phenol resin. An exemplary terpene-phenol resin may be a copolymer of phenolic monomer with limonene. Polymeric resinous materials containing units derived from limonene and more than one of dicyclopentadiene (DCPD), indene, teretiary-butyl styrene, indene AMS, vinyl toluene, dimethyl-dicyclopentadiene are contemplated as well. The resin compound can be liquid or solid.

The resin can comprise a traction resin or plasticizing resin, or tackifying resin. In one embodiment, the resin may be partially or fully hydrogenated. In one embodiment, the resin may undergo further hydrogenation to obtain a desired degree of saturation according to processes known to one of ordinary skill in the art.

In summary, the ELT fraction can be co-polymerized to synthesize a resin within a desired grade, cut or blend. The present invention relates to a resin consisting essentially of the reaction product of the polymerization reaction between monomers from ELT oil and has a glass transition temperature (Tg) ranging from -30°C to 140°C, a softening point from 10°C to 170°C and a molecular weight Mw between 100 and 5000 Dalton (Da).

The resins of this invention are particularly useful as modifiers for natural rubber and various synthetic rubber compositions. In accordance with the invention, various articles of manufacture, such as, for example tires and industrial rubber products, may be prepared using such rubber compositions. Upon vulcanization, such a rubber composition may be incorporated into a pneumatic or non-pneumatic tire, belt, hose, air spring, shoe product or motor mount. In the case of a tire, the rubber composition may be incorporated in a variety of rubber tire components, such as, for example, a tread (including tread cap and/or tread base), sidewall, apex, chafer, sidewall, insert, wire coat and/or innerliner. In one embodiment, the compound is a tread. The current ELT oil-derived resin may be used in silica tread compounds as a traction resin delivering a balanced performance. In one embodiment, the disclosed resin is used in high performance tire compounds comprising one or both a relatively high silica and a relatively high resin loading. In yet further embodiments, the ELT hydrocarbon-based resin disclosed herein is used in adhesives.

A tire of the present invention may be a race tire, passenger tire, aircraft tire, agricultural tire, earthmover, off-the-road tire or truck tire. The tire may also be radial or bias.

The resin can be used as a partial or full replacement of regular plasticizers and blends, which are typically used in compounds for tire & technical goods compounds, like traction, tackifier and processing resin and can be used in combinations with other resins, such as hydrocarbon or biobased resins, oils, processing aids, and blends thereof. In one embodiment, the ELT hydrocarbon-based resin can be used as an extender - by replacing the extender oil - in synthetic polymers, such as styrene butadiene (SSBR) and polybutadiene (BR).

The following examples further illustrate the invention. In these examples, parts and percentages are by gram unless otherwise indicated.

### EXAMPLES

The reactants, reaction conditions and product characteristics are given in the Table I.

### Example 1: Limonene resin

To a neck 3-liter flask equipped with a mechanical stirrer, nitrogen and thermocouple was added 210 ml toluene, 175 ml isooctane and 11.8 grams of aluminum chloride. The reaction mixture was cooled in a water bath to 14°C. Then 50 ml of limonene and 0.12 grams of methanol initiator were added to the mixture The temperature was increased to 29°C and the mixture turned an orange amber color. The mixture was allowed to cool to 20°C after which additional portions of limonene were added. The process was repeated until a total of 500 ml of limonene added. An additional 2.4 grams of aluminum chloride was added, and the mixture was allowed to react four hours with continuous stirring.

The reaction was quenched with 500 ml of 30% isopropanol water solution. The water layer was siphoned off and the mixture washed with two additional portions of 500 ml of aqueous isopropanol. The hydrocarbons were removed by vacuum distillation (roto-evaporator), slowly incrementally until the final temperature was 90°C and vacuum of 1333 Pa to 2000 Pa. Lastly, the resin was refined by relatively high temperature nitrogen sparging as described in US 6,121,392. The resulting resin was a hard off-white solid characterized by a 133°C softening point determined by the ring and ball method of ASTM E-28-58T and at 87.4°C glass transition temperature determined by DSC differential scanning calorimetry at 10K/min ramp rate.

### Example 2: Resin from 8% limonene ELT oil

To a neck 3-liter flask equipped with a mechanical stirrer, nitrogen and thermocouple was added 210 ml toluene, 175 ml isooctane and 11.8 grams of aluminum chloride. The reaction mixture was cooled in a water bath to 14°C. Then 50 ml of ELT oil and 0.12 grams of methanol initiator were added to the mixture The temperature was increased to 29°C and the mixture turned an orange amber color. The mixture was allowed to cool to 20°C after which additional portions of ELT oil were added. The process was repeated until a total of 500 ml of ELT oil added. An additional 2.4 grams of aluminum chloride was added, and the mixture was allowed to react four hours with continuous stirring.

The reaction was quenched with 500 ml of 30% isopropanol water solution. The water layer was siphoned off and the mixture washed with two additional portions of 500 ml of aqueous isopropanol. The hydrocarbons were removed by vacuum distillation (roto-evaporator), slowly incrementally until the final temperature was 90°C and vacuum of 1333 Pa to 2000 Pa. Lastly, the resin was refined by relatively high temperature nitrogen sparging as described in US 6,121,392. The resulting resin was a hard off-white solid characterized by a 75.5°C softening point determined by the ring and ball method of ASTM E-28-58T and a 19.9°C glass transition temperature determined by DSC differential scanning calorimetry at 10K/min ramp rate.

### Example 3: Resin from 15% limonene ELT oil

The sample was prepared following the method described for Example 2 except the ELT oil was twice distilled with 15% limonene content.

The resulting resin was a semi-hard amber solid characterized by a 66.9°C softening point determined by the ring and ball method of ASTM E-28-58T and a 14.1°C glass transition temperature determined by DSC (differential scanning calorimetry) at 10K/min ramp rate.

**TABLE I**

| | Commercial Resin^{A} | Comparative Example 1^{B} | Inventive Example 2^{C} | Inventive Example 3^{D} |
|---|---|---|---|---|
| Limonene content in ELT oil | 100% | 100% | 8% | 15% |
| Glass Transition Temperature', °C | 73 | 87 | 20 | 14 |
| Ring and Ball Softening Pt², °C | 122 | 133 | 75 | 67 |
| Molecular Weight Mw, g/mole³ | 1100 | 1070 | 550 | 520 |

| | | | | |
|---|---|---|---|---|
| ^{A} Polyterpene resin commercially available under the tradename DERCOLYTE L 120 ^{B} Resin synthesized using Limonene, 88% monomer ^{C} Resin synthesized using distilled ELT oil resin; limonene + styrene + indene monomers ^{D} Resin synthesized using fractioned ELT oil resin; limonene + styrene monomers ¹ ASTM D3418-75 ² ASTM E28-58T ³ ASTM D6579-11 | | | | |

Table II characterizes an exemplary resin material in accordance with aspects of the exemplary embodiments.

**TABLE II**

| | EMBODIMENT 1 | EMBODIMENT 2 |
|---|---|---|
| Glass Transition Temperature', °C | -30-140 | 55-85 |
| Ring and Ball Softening Pt², °C | 10-170 | 100-130 |
| Molecular Weight Mn, g/mole | 100-5000 | 500-1000 |

| | | |
|---|---|---|
| ¹ ASTM D3418-75 ² ASTM E28-58T ³ ASTM D6579-11 | | |

## Claims

1. A resin comprising or consisting of a reaction product of the polymerization reaction of oil monomers, wherein the oil monomers have been obtained from a rubber article and wherein the reaction product has a glass transition temperature Tg ranging from -30°C to 140°C and determined in accordance with ASTM D3418-75, a softening point in range of from 10°C to 170°C and determined in accordance with ASTM E28-58T, and a molecular weight Mw in a range of from 100 to 5000 Da and determined in accordance with ASTM D6579-11.

2. The resin of claim 1 wherein the reaction product has a glass transition temperature Tg ranging from 10°C to 100°C, a softening point ranging from 60°C to 140°C, and a molecular weight ranging from 300 to 2000 Da.

3. The resin of claim 1 or 2 wherein the oil monomers are derived from or obtained by thermal depolymerization of preferably cured tires, end-of-life-tires (ELTS) and/or from other, preferably cured rubber articles, or wherein the oil monomers are end-of-life-tire (ELT) oil monomers.

4. The resin of claim 3, wherein the tires are whole or substantially whole tires and/or wherein the other rubber articles are cured and/or uncured rubber production plant waste.

5. The resin of at least one of the previous claims, wherein the resin is a hydrocarbon resin.

6. The resin of at least one of the previous claims, wherein the resin is formed solely by using said oil monomers.

7. The resin of at least one of the previous claims, wherein the resin is a hydrocarbon resin formed from said oil monomers copolymerized with other hydrocarbon cuts, these hydrocarbon cuts being preferably selected from a group comprising: olefins and diolefins containing five or an average of five carbon atoms, olefins and diolefins containing nine or an average of nine carbon atoms, alphamethylstyrene (AMS), dicyclopentadiene (DCPD), phenol or a phenolic monomer, rosin or epoxy, said materials being used sole or in mixtures or blends thereof.

8. The resin of at least one of the previous claims, wherein the resin is hydrogenized.

9. The resin of at least one of the previous claims, wherein the oil monomers comprise at least 15 wt.% of C₄-C₁₂ olefinic monomers, preferably at least 20 wt.% of C₄-C₁₂ olefinic monomers, and/or wherein the oil monomers comprise styrenics, limonenes and indenes.

10. An article of manufacture comprising or having incorporated the resin of at least one of the previous claims.

11. The article of manufacture of claim 10, wherein the article of manufacture is a rubber article, a tire or a tire component or an adhesive formulation.

12. A tire having a tread compound and or carcass compound, said tread compound and/or said carcass compound comprising: at least one rubber selected from the group consisting of natural rubber, rubbers derived from a diene monomer, and mixtures thereof; and a resin in accordance with at least one of the previous claims 1 to 9.

13. A method for forming a resin from oil monomers, the method comprising the steps of: obtaining an oil derived from thermal depolymerization of end-of-life tires (ELTS) and polymerizing the oil to produce a resin, preferably a hydrocarbon resin.

14. The method of claim 13 further comprising refining the oil to a desired hydrocarbon composition.

15. The method of claim 13 or 14 wherein the polymerizing comprises: (i) polymerizing monomers of the oil to produce the resin; and/or (ii) copolymerizing monomers of the oil with other hydrocarbon cuts to produce the resin.
